# EUROPÄISCHE PATENTSCHRIFT

(11) **EP 3 380 757 B1**
(45) Veröffentlichungstag und Bekanntmachung des Hinweises auf die Patenterteilung: **05.05.2021**
(21) Anmeldenummer: 16790953.0
(22) Anmeldetag: 31.10.2016
(51) Int. Cl.: F16H 57/04, F16H 61/00, F16H 57/02

(54) **PUMPENANORDNUNG UND HYDRAULIKANORDNUNG FÜR KRAFTFAHRZEUG-ANTRIEBSSTRANG**
PUMP ARRANGEMENT AND HYDRAULIC ARRANGEMENT FOR A MOTOR VEHICLE DRIVE TRAIN
ENSEMBLE DE POMPES ET ENSEMBLE HYDRAULIQUE POUR CHAÎNE CINÉMATIQUE DE VÉHICULE AUTOMOBILE

(30) Priorität: 25.11.2015 DE 102015120440
(43) Veröffentlichungstag der Anmeldung: 03.10.2018
(73) Patentinhaber: Magna PT B.V. & Co. KG, 74199 Untergruppenbach (DE)
(72) Erfinder: PAVLOVIC, Miloslav, 74172 Neckarsulm (DE); CERMAK, Peter, 74074 Heilbronn (DE)
(74) Vertreter: Rausch, Gabriele
(86) Internationale Anmeldenummer: PCT/EP2016/076226
(87) Internationale Veröffentlichungsnummer: WO 2017/089073

(56) Entgegenhaltungen:
- EP-A1- 0 764 799
- WO-A1-2014/143303
- WO-A1-2015/041274
- WO-A1-2015/046560
- DE-A1-102009 015 541

## Beschreibung

Die vorliegende Erfindung betrifft eine Pumpenanordnung für einen Kraftfahrzeug-Antriebsstrang, gemäß Anspruch 1.

Ferner betrifft die vorliegende Erfindung eine Hydraulikanordnung für einen Kraftfahrzeug- Antriebsstrang, gemäß Anspruch 7.

Schließlich betrifft die vorliegende Erfindung einen Antriebsstrang für ein Kraftfahrzeug mit einer solchen Pumpenanordnung oder mit einer solchen Hydraulikanordnung.

Auf dem Gebiet der Antriebsstränge von Kraftfahrzeugen ist es bekannt, eine Hydraulikanordnung zur Betätigung von automatisierten Komponenten des Antriebsstranges und/oder zur Schmierung bzw. Kühlung von Komponenten des Antriebsstranges bereitzustellen. Klassischerweise wird hierbei eine Pumpe, wie bspw. eine Flügelzellenpumpe, verwendet, die mit dem Antriebsmotor (typischerweise ein Verbrennungsmotor) gekoppelt ist. Mit anderen Worten stellt die Pumpe einen Pumpendruck bereit, der von der Drehzahl des Antriebsmotors abhängt. Demzufolge weist die Hydraulikanordnung häufig eine Druckregeleinrichtung auf, die bspw. eine Leitungsdruckventileinrichtung beinhalten kann, die aus dem Druck der Pumpe einen festen Leitungsdruck erzeugt. Diese Anordnung kann bspw. durch einen Druckspeicher ergänzt werden.

Für die Betätigung von Aktuatoren des Antriebsstranges sind relativ hohe Drücke bei relativ geringen Volumenströmen erforderlich. Umgekehrt sind die Anforderungen bei der Schmierung/Kühlung relativ hohe Volumenströme bei vergleichsweise niedrigem Druck.

Es ist daher bekannt, eine Hydraulikanordnung mit zwei Pumpen zu versehen, einer Hochdruckpumpe für die Aktuatorik sowie einer Schmieröl-Pumpe für Radsätze.

Die Hochdruckpumpe wird häufig in Gehäusewände eines Getriebe- und/oder Kupplungsgehäuses eingepresst. Es kann ein eigenes Gehäuse für die Hochdruckpumpe eingespart werden. Nachteilig ist hierbei ggf., dass eine Anordnung der Pumpe in der Regel nur axial möglich ist, so dass man in der Freiheit der konstruktiven Ausführung der Pumpe beschränkt ist. Dies liegt im Wesentlichen daran, dass eine Aufnahme in einem Getriebegehäuse in der Regel nur axial bearbeitet werden kann. Zudem ist eine Anordnung der Pumpe in diesem Fall nur an bestimmten Stellen in dem Getriebegehäuse möglich.

Andererseits ist auch bekannt, eine Pumpe in einem separaten Gehäuse vorzusehen und innerhalb des Innenraumes des Getriebegehäuses zu montieren. Es ist auch bekannt, eine Niederdruckpumpe und eine Hochdruckpumpe gemeinsam von einem Elektromotor anzutreiben. In diesem Fall kann die Hydraulikanordnung unabhängig von dem Betrieb des Verbrennungsmotors geeignete Drücke zur Betätigung von Antriebsstrangkomponenten erzeugen. Dies kann bspw. bei sog. Start-/Stopp-Systemen vorteilhaft sein, wie auch beim sog. "Segel"-Modus, bei dem der Verbrennungsmotor von dem Antriebsstrang abgekoppelt wird und abgeschaltet wird oder im Leerlauf läuft.

Aus der WO2014/43303 A1 ist ein hydraulisches System für den Betrieb eines hybriden Antriebs bekannt, das eine parallele Anordnung einer mechanischen und einer elektrischen Pumpe aufweist. Die beiden Pumpen werden in einem gemeinsamen Pumpengehäuse aufgenommen.

Es ist keine dritte Pumpe vorhanden, die ebenfalls im gemeinsamen Pumpenanordnungsgehäuse festgelegt ist.

Auch die WO 2015/041 274 A1, die DE10 2009 015 541 A1 und die WO 2015/046 560 A1 zeigen jeweils hydraulische Anordnungen mit einer mechanischen und einer elektrisch getriebenen Pumpe. In keinen der Druckschriften ist eine dritte Pumpe eingesetzt, um ein Doppelkupplungsgetriebe zu schmieren und zu kühlen.

Aus der EP 0764799 A1 ist eine Anordnung mit drei Pumpen bekannt. Dabei werden zwei der Pumpen vom Verbrennungsmotor achsparallel betrieben.

Vor dem obigen Hintergrund ist es eine Aufgabe der Erfindung, eine verbesserte Pumpenanordnung und eine verbesserte Hydraulikanordnung für einen Kraftfahrzeug-Antriebsstrang sowie einen hiermit ausgestatteten Kraftfahrzeug-Antriebsstrang anzugeben.

Die obige Aufgabe wird bei der eingangs genannten Pumpenanordnung dadurch gelöst, dass die erste und die zweite Pumpe an einem gemeinsamen Pumpenanordnungsgehäuse festgelegt sind, das dazu ausgebildet ist, in einem Innenraum eines Antriebsstranggehäuses montiert zu werden.

Ferner wird die obige Aufgabe gelöst durch eine Hydraulikanordnung für einen Kraftfahrzeug-Antriebsstrang, mit einer erfindungsgemäßen Pumpenanordnung sowie mit einer Ventilanordnung, die mit einem Druckanschluss der ersten Pumpe und mit einem Druckanschluss der zweiten Pumpe verbunden ist, wobei die Ventilanordnung ferner mit wenigstens einem Hydraulikaktuator zum Betätigen einer Antriebsstrangkomponente verbunden ist.

Durch die Bereitstellung eines gemeinsamen Pumpenanordnungsgehäuses für eine erste Pumpe, die von einem Antriebsmotor des Antriebsstranges antreibbar ist, also insbesondere von einem Verbrennungsmotor, sowie für eine zweite Pumpe, die von einem Elektromotor antreibbar ist, kann eine Hydraulikdruckversorgung zur Betätigung wenigstens einer Antriebsstrangkomponente, wie einer Kupplungsanordnung und/oder einer Getriebeanordnung, in einem Pumpenanordnungsgehäuse geometrisch zusammengefasst werden. Das Pumpenanordnungsgehäuse kann auf vergleichsweise einfache Art in dem Innenraum des Antriebsstranggehäuses montiert werden, wobei große Freiheitsgrade hinsichtlich der Ausrichtung und Anordnung möglich sind. Ferner kann das Antriebsstranggehäuse deutlich vereinfacht werden.

Die erste Pumpe ist vorzugsweise eine Hauptpumpe für eine Kupplungsaktuatorik und/oder für eine Getriebeaktuatorik. Die zweite Pumpe ist vorzugsweise eine Hilfspumpe für die Betriebsmodi: Segeln, Star Stopp, Schnellbefüllung von Kupplungsaktuatoren bei niedrigen Drehzahlen des Antriebsmotors, etc. Eine Pumpenachse der ersten Pumpe ist vorzugsweise parallel zu einer Antriebsstrangachse ausgerichtet, die vorzugsweise parallel zu einer Kurbelwelle eines Verbrennungsmotors verläuft. Eine Kopplung des Antriebsgliedes der ersten Pumpe mit dem Antriebsmotor kann bspw. über einen Radsatz, über ein Zugmittelgetriebe oder dergleichen erfolgen.

Eine erste Pumpenachse der ersten Pumpe ist windschief ausgerichtet zu einer Pumpenachse der zweiten Pumpe. Die zweite Pumpe und ein hiermit verbindbarer Elektromotor sind jedoch in der Regel koaxial zueinander angeordnet.

Das Pumpenanordnungsgehäuse ist vorzugsweise ein Gehäuse aus einem Kunststoffmaterial. Von besonderem Vorzug ist es, wenn das Pumpenanordnungsgehäuse als zweiteiliges Gehäuse ausgebildet ist, insbesondere in sog. Topfbauweise.

Die erste Pumpe wird dabei vorzugsweise in eine Axialöffnung des Pumpenanordnungsgehäuses eingepresst. Die zweite Pumpe kann insbesondere an einer Außenseite des Pumpenanordnungsgehäuses festgelegt werden und weist daher vorzugsweise ein eigenes Pumpengehäuse auf, das bei der Montage mit Kanälen des gemeinsamen Pumpenanordnungsgehäuses fluiddicht verbunden wird.

Die erste Pumpe ist vorzugsweise eine unidirektionale Pumpe, wohingegen die zweite Pumpe auch eine bidirektionale Pumpe sein kann.

Generell ist es denkbar, dass die zweite Pumpe als sog. Pumpenaktuator ausgebildet ist, wobei ein von der zweiten Pumpe erzeugter Druck durch Einstellen der Drehzahl des antreibenden Elektromotors geregelt wird. Vorzugsweise sind jedoch sowohl die erste Pumpe als auch die zweite Pumpe mit einer Ventilanordnung verbunden, den von der ersten und der zweiten Pumpe bereitgestellten Druck in einen Leitungsdruck umsetzt.

Die Aufgabe wird somit vollkommen gelöst.

Gemäße der Erfindung ist ferner eine dritte Pumpe an dem gemeinsamen Pumpenanordnungsgehäuse festgelegt.

Die dritte Pumpe ist vorzugsweise koaxial zu der ersten Pumpe angeordnet. Die dritte Pumpe ist vorzugsweise eine Pumpe, die zur Schmierung und/oder Kühlung optimiert ist, insbesondere zur Schmierung und Kühlung einer Kupplungseinrichtung wie einer nasslaufenden Doppelkupplungsanordnung und/oder zur Einspritzschmierung/Kühlung von Getriebekomponenten. Die dritte Pumpe ist vorzugsweise eine Gerotorpumpe.

Generell ist es denkbar, die dritte Pumpe durch einen separaten Motor anzutreiben, bspw. durch einen separaten Elektromotor, und/oder, bei Bereitstellung geeigneter Kopplungen durch den Elektromotor, mittels dem auch die zweite Pumpe angetrieben wird.

Jedoch gemäß der Erfindung ist die dritte Pumpe mit dem Antriebsglied gekoppelt ist.

Bei dieser Ausführungsform wird die dritte Pumpe folglich ebenfalls von dem Antriebsmotor angetrieben, insbesondere von einem Verbrennungsmotor. Hierbei ist es ferner bevorzugt, wenn die erste Pumpe und die dritte Pumpe koaxial zueinander ausgebildet sind, insbesondere in axialer Richtung hintereinander angeordnet. Ferner ist es vorteilhaft, wenn das Antriebsglied oder ein hiermit verbundenes Kopplungsglied die erste Pumpe und/oder die dritte Pumpe in axialer Richtung durchsetzt.

Die erste Pumpe ist vorzugsweise näher an einem Getriebeeingang angeordnet als die dritte Pumpe.

Ferner ist es vorteilhaft, wenn die dritte Pumpe mit dem Antriebsglied über eine axiale Steckverbindung verbunden ist.

Dies ist insbesondere dann vorteilhaft, wenn die dritte Pumpe an einem anderen Gehäuseteil des gemeinsamen Pumpenanordnungsgehäuses festgelegt ist, das zur Montage der Pumpenanordnung parallel zur ersten Pumpenachse montiert wird, so dass mit diesem Montageschritt die Kopplung zwischen der dritten Pumpe und dem Antriebsglied über die axiale Steckverbindung realisiert werden kann.

Vorzugsweist ist die dritte Pumpe mit einem eigenen Gehäuse ausgestattet, das in eine Axialausnehmung eines Gehäuseteils des Pumpenanordnungsgehäuses eingesetzt wird.

Insgesamt ist es folglich ferner vorteilhaft, wenn das Pumpenanordnungsgehäuse ein erstes Gehäuseteil und ein zweites Gehäuseteil aufweist, die entlang einer Verbindungsebene miteinander verbunden sind, die quer zu einer Achse der ersten Pumpe verläuft.

Die zwei Gehäuseteile sind jeweils vorzugsweise aus Kunststoff hergestellt. Die zwei Gehäuseteile werden vorzugsweise über Schrauben/Passstifte in axialer Richtung, d.h. parallel zu der Pumpenachse der ersten Pumpe aneinander montiert. Die hierdurch eingerichtete Verbindungsebene kann als eine einheitliche Ebene ausgebildet sein, die quer, insbesondere senkrecht zu der Achse der ersten Pumpe verläuft, kann jedoch auch durch eine Mehrzahl von Verbindungsebenenabschnitten ausgebildet sein, die axial gegeneinander versetzt sein können und/oder in radialer Richtung unterschiedlich ausgebildet sein können. Entscheidend ist es, dass das erste und das zweite Gehäuseteil in Richtung der Achse der ersten Pumpe aneinander montiert werden.

Folglich ist es insgesamt vorteilhaft wenn das Pumpenanordnungsgehäuse ein erstes Gehäuseteil und ein zweites Gehäuseteil aufweist, wobei die erste Pumpe an dem ersten Gehäuseteil festgelegt ist und wobei die zweite Pumpe an dem zweiten Gehäuseteil festgelegt ist.

Bei dieser Ausführungsform können die erste und die zweite Pumpe separat voneinander in Bezug auf das erste bzw. das zweite Gehäuse festgelegt werden, und das Pumpenanordnungsgehäuse kann anschließend durch Verbinden des ersten und des zweiten Gehäuseteils gebildet werden.

Die erste Pumpe ist vorzugsweise in das erste Gehäuseteil eingepresst. Die zweite Pumpe ist vorzugsweise außen an dem zweiten Gehäuseteil festgelegt. Die dritte Pumpe ist vorzugsweise an dem zweiten Gehäuseteil festgelegt, und zwar vorzugsweise derart, dass die dritte Pumpe beim Festlegen der zwei Gehäuseteile aneinander über eine axiale Steckverbindung mit einem Antriebsglied verbunden wird.

Ferner ist es vorteilhaft, wenn die erste Pumpe in einer ersten Axialausnehmung des ersten Gehäuseteils aufgenommen ist, und/oder wenn die dritte Pumpe in einer zweiten Axialausnehmung des Pumpenanordnungsgehäuses aufgenommen ist. Besonders bevorzugt ist es, wenn die erste Axialausnehmung auf der dem zweiten Gehäuseteil abgewandten axialen Seite des ersten Gehäuseteils ausgebildet ist, derart, dass die Pumpe mit einem Antriebsglied verbunden sein kann, das sich aus der ersten Axialausnehmung heraus erstreckt und bspw. mit einem Antriebsrad, bspw. einem Zahnrad, verbunden sein kann, das mit dem Antriebsmotor verbunden ist.

Die zweite Axialausnehmung des Pumpenanordnungsgehäuses ist vorzugsweise eine Axialausnehmung in dem zweiten Gehäuseteil. Die zweite Axialausnehmung ist hierbei vorzugsweise auf der dem ersten Gehäuseteil zugewandten axialen Seite des zweiten Teils ausgebildet.

Das Pumpenanordnungsgehäuse kann dabei einen Teil eines Pumpengehäuses der ersten Pumpe und/oder eines Pumpengehäuses der dritten Pumpe bilden. Die erste und die dritte Pumpe können jedoch jeweils auch eigene Pumpengehäuse haben, die in das Pumpenanordnungsgehäuse eingesetzt sind.

Das Montieren der ersten Pumpe an dem ersten Gehäuseteil und/oder das Montieren der dritten Pumpe an dem zweiten Gehäuseteil erfolgt vorzugsweise durch einen Einpressvorgang, so dass die erste Pumpe in der ersten Axialausnehmung eingepresst ist und/oder die dritte Pumpe in der zweiten Axialausnehmung eingepresst ist.

Ferner ist es insgesamt vorteilhaft, wenn die an dem Pumpenanordnungsgehäuse festgelegten Pumpen jeweils einen Pumpensauganschluss aufweisen, wobei in dem Pumpenanordnungsgehäuse wenigstens ein Saugkanal ausgebildet ist, der einen der Pumpensauganschlüsse mit einem zugeordneten Gehäusesauganschluss verbindet.

Mit anderen Worten bildet das Pumpenanordnungsgehäuse wenigstens einen Saugkanal, der einen Sauganschluss einer der Pumpen mit einem Gehäusesaufanschluss verbindet, der wiederum mit einem Steckrohr oder dergleichen verbunden sein kann, um den Gehäusesauganschluss mit einem Fluidsumpf zu verbinden (direkt oder über ein Fluidfil-ter).

Vorzugsweise sind an dem Pumpenanordnungsgehäuse Saugkanäle für jede der daran festgelegten Pumpen ausgebildet.

In entsprechender Weise ist an dem Pumpenanordnungsgehäuse vorzugsweise wenigstens ein Druckkanal ausgebildet, der einen Pumpendruckanschluss mit einem Gehäusedruckanschluss verbindet. Der Gehäusedruckanschluss kann dabei bspw. mit einer Ventilanordnung verbunden sein. Vorzugsweise sind an dem Pumpenanordnungsgehäuse Druckkanäle für jede der daran festgelegten Pumpen ausgebildet.

Der oder die Gehäusesauganschlüsse des Pumpenanordnungsgehäuses sind vorzugsweise an einer Unterseite des Pumpenanordnungsgehäuses ausgebildet, derart, dass in vertikaler Richtung im Wesentlichen sich nach unten erstreckende Steckrohre daran angeschlossen werden können. In entsprechender Weise ist es bevorzugt, wenn wenigstens einer, vorzugsweise sämtliche Gehäusedruckanschlüsse, die mit jeweiligen Druckkanälen verbunden sind, an einer Oberseite und/oder an einer axialen Seite des Pumpenanordnungsgehäuses ausgebildet ist bzw. sind.

An dem Pumpenanordnungsgehäuse kann ferner ein Durchgangskanal ausgebildet sein, der eine Oberseite des Pumpenanordnungsgehäuses mit einer Unterseite des Pumpenanordnungsgehäuses verbindet, um auf diese Weise bspw. eine einfache Verbindung zu einem Anschluss einer Strahlpumpe zu ermöglichen.

Die erste Pumpe kann insbesondere eine Flügelzellenpumpe sein, kann jedoch auch eine Zahnradpumpe sein, insbesondere eine Innenzahnradpumpe, vorzugsweise eine Gerotorpumpe. Die zweite Pumpe ist vorzugsweise als Gerotorpumpe realisiert. Die dritte Pumpe kann ebenfalls eine Gerotorpumpe sein, kann jedoch auch eine andere Art von Zahnradpumpe oder eine Flügelzellenpumpe oder Ähnliches sein.

Bei der erfindungsgemäßen Hydraulikanordnung ist es von besonderem Vorzug, wenn die Ventilanordnung eine Leitungsdruckventileinrichtung aufweist, die aus dem Druck der ersten Pumpe und/oder aus dem Druck der zweiten Pumpe einen Leitungsdruck erzeugt, und/oder eine Aktuatordruckventileinrichtung aufweist, die einen Aktuatordruck für den Hydraulikaktuator erzeugt.

Der Leitungsdruck wird vorzugsweise auf einen konstanten Systemdruck geregelt, vorzugsweise ohne Druckspeicher. Die Aktuatordruckventileinrichtung erzeugt vorzugsweise Stelldrücke für Aktuatoren aus dem Leitungsdruck.

Insgesamt lässt sich mit der vorliegenden Erfindung wenigstens einen der folgenden Vorteile erzielen.

Zum einen ergibt sich eine optimale Freiheit hinsichtlich der Gestaltung der Schnittstellen zwischen der Pumpenanordnung und dem Antriebsstranggehäuse, innerhalb dessen das Pumpenanordnungsgehäuse festzulegen ist. Mit anderen Worten können in dem Antriebsstranggehäuse einfache Schnittstellen und eine einfache Bearbeitung erreicht werden. Zudem können Gussteile des Antriebsstranggehäuses gewichtsoptimal gestaltet werden. Ferner ist ein einfacher Austausch von Pumpenanordnungen möglich, und/oder es ist generell möglich, die Pumpenanordnung durch eine andere Pumpenanordnung zu ersetzen, in der andere Pumpentechnologien zum Einsatz kommen, ohne dass es notwendig ist, das Antriebsstranggehäuse ändern zu müssen.

Ein weiterer bedeutender Vorteil liegt darin, dass die Pumpenanordnung vormontiert Generell ist es ferner vorteilhaft, dass die Hydraulikdruckversorgung auf verschiedene Pumpen verteilt wird. Die erste Pumpe kann eine Zentrierfunktion der Pumpenanordnung innerhalb des Antriebsstranggehäuses übernehmen. Die erste Pumpe ist hinsichtlich ihres Hubvolumens auf die Funktion der Bereitstellung eines hohen Druckes bei vergleichsweise geringen Volumenströmen optimiert. Die dritte Pumpe ist vorzugsweise darauf optimiert, einen vergleichsweise hohen Volumenstrom bei vergleichsweise geringem Druck bereitzustellen.

Der Elektromotor lässt sich vorzugsweise auf einfache Weise mit der dritten Pumpe koppeln. Der Elektromotor kann bspw. in einer radialen Bohrung in dem Antriebsstranggehäuse aufgenommen werden, und kann insbesondere von außerhalb des Antriebsstranggehäuses montiert werden.

Vorzugsweise sind für jede der an dem Pumpenanordnungsgehäuse festgelegten Pumpen die erforderlichen Saug- und/oder Druckanschlüsse in das Pumpenanordnunggehäuse integriert, insbesondere in Form von Saugkanälen und/oder Druckkanälen. Gehäusesauganschlüsse können direkt mit Saugfiltern bzw. Steckrohren verbunden werden. Gehäusedruckanschlüsse des Pumpenanordnungsgehäuses können über Steckrohre mit hydraulischen Schnittstellen am Getriebegehäuse verbunden sein.

Ausführungsbeispiele der Erfindung sind in der Zeichnung dargestellt und werden in der nachfolgenden Beschreibung näher erläutert. Es zeigen:
Fig. 1 eine schematische Darstellung eines Antriebsstranges eines Kraftfahrzeuges mit einer erfindungsgemäßen Hydraulikanordnung, in der eine erfindungsgemäße Pumpenanordnung integriert ist, wobei die windschiefe Anordnung der zweite Pumpenachse nicht dargestellt ist;
Fig. 2 eine weitere schematische Darstellung eines Antriebsstranges mit einer Ausführungsform einer erfindungsgemäßen Pumpenanordnung;
Fig. 3 eine schematische Längsschnittansicht eines Antriebsstranggehäuses mit einer darin angeordneten erfindungsgemäßen Pumpenanordnung;
Fig. 4 eine perspektivische Ansicht einer weiteren Ausführungsform einer erfindungsgemäßen Pumpenanordnung;
Fig. 5 eine weitere Ansicht der Pumpenanordnung der Fig. 4 in einer weiteren Perspektive, wobei zwei Gehäuseteile in einer Verbindungsebene voneinander getrennt dargestellt sind;
Fig. 6 die Pumpenanordnung der Figuren 4 und 5 in einer perspektivischen Ansicht von schräg unten;
Fig. 7 eine horizontale Längsschnittansicht durch die Pumpenanordnung der Figuren 4 bis 6;
Fig. 8 eine vertikale Längsschnittansicht durch die Pumpenanordnung der Figuren 4 bis 6;
Fig. 9 eine Querschnittsansicht entlang der Linie IX-IX der Fig. 8; und
Fig. 10 eine Querschnittsansicht entlang der Linie X-X der Fig. 8.

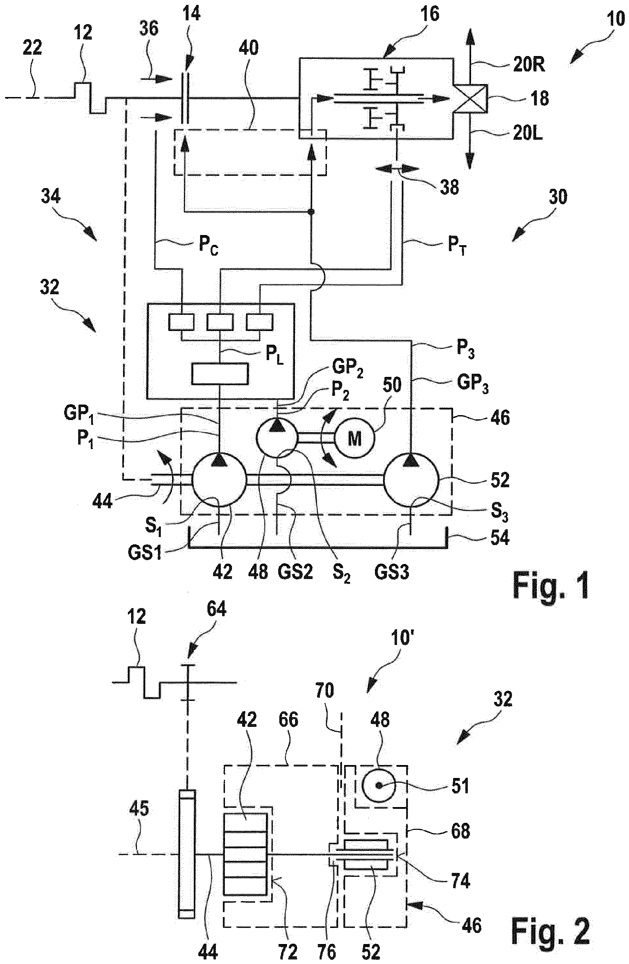

In Fig. 1 ist ein Antriebsstrang für ein Kraftfahrzeug schematisch dargestellt und generell mit 10 bezeichnet. Der Antriebsstrang 10 weist einen Antriebsmotor 12 auf, der bspw. als Verbrennungsmotor ausgebildet sein kann, jedoch auch als Hybrid-Antriebseinheit ausgebildet sein kann. Ferner beinhaltet der Antriebsstrang 10 eine Kupplungsanordnung 14, die eingangsseitig mit dem Antriebsmotor 12 gekoppelt ist und die ausgangsseitig mit einer Getriebeanordnung 16 gekoppelt ist. Die Kupplungsanordnung 14 kann eine Einfachkupplung sein, kann jedoch auch eine Doppelkupplungsanordnung sein. Ein Ausgang der Getriebeanordnung 16 ist mit einem Differential 18 verbunden, mittels dessen Antriebsleistung auf angetriebene Räder 20L, 20R verteilbar ist.

Die Getriebeanordnung 16 kann ein automatisiertes Schaltgetriebe sein, kann jedoch auch ein Doppelkupplungsgetriebe mit zwei nicht näher bezeichneten Teilgetrieben sein. Eine Längsachse des Antriebsstranges 10, die mit einer Längsachse des Kraftfahrzeuges zusammenfallen kann, ist in Fig. 1 bei 22 gezeigt.

Der Antriebsstrang 10 ist vorzugsweise ein automatisierter Antriebsstrang, bei dem die

Kupplungsanordnung 14 und/oder die Getriebeanordnung 16 automatisiert betätigt werden. Ferner kann die Kupplungsanordnung 14 und/oder die Getriebeanordnung 16 für eine Einspritzschmierung ausgelegt sein.

Der Antriebsstrang 10 beinhaltet ferner eine Hydraulikanordnung 30. Die Hydraulikanordnung 30 weist eine Pumpenanordnung 32 sowie eine Ventilanordnung 34 auf. Die Pumpenanordnung 32 dient zur Bereitstellung von Hydraulikfluid unter Druck und/oder mit einem bestimmten Volumenstrom. Die Ventilanordnung 34 ist eingangsseitig mit der Pumpenanordnung 32 verbunden und ist ausgangsseitig mit einer Kupplungsak- tuatorik 36 und/oder mit einer Getriebeaktuatorik 38 verbunden. Die Kupplungsaktuatorik 36 und/oder die Getriebeaktuatorik 38 können durch Kolben/Zylinderanordnungen gebildet sein. Im Falle der Kupplungsaktuatorik 36 sind die Kolben/Zylinderanordnungen vorzugsweise einseitig wirkend. Im Falle der Getriebeaktuatorik 38, bei der mehrere Kolben/Zylinderanordnungen zum axialen Betätigen von Schaltwellen und/oder Schaltstangen oder dergleichen ausgebildet sind, können die Kolben/Zylinderanordnungen doppeltwirkend ausgebildet sein.

Bei 40 ist ferner schematisch ein Schmier-/Kühlkreis angedeutet, mittels dessen die Kupplungsanordnung 14 und/oder die Getriebeanordnung 16 mit Fluid zum Zwecke des Schmierens und/oder Kühlens versorgt wird. Während die Kupplungsaktuatorik 36 und/oder die Getriebeaktuatorik 38 in der Regel mit einem hohen Druck betätigt wird, wird der Schmier-/Kühlkreis 40 mit einem hohen Volumenstrom betrieben. Der Schmier-/Kühlkreis 40 kann dazu ausgebildet sein, Fluid zentral einer Kupplung der Kupplungsanordnung 14 zuzuführen, um diese zu schmieren und/oder zu kühlen (bspw. im Fall einer nasslaufenden Lamellenkupplung). Ferner kann der Schmier-/Kühlkreis 40 dazu ausgebildet sein, Fluid nach der Art einer Einspritzschmierung zentral Wellen und/oder Lagern und/oder Zahnradpaarungen zuzuführen.

Die Pumpenanordnung 32 weist eine erste Pumpe 42 auf, die einen Sauganschluss S, aufweist und an einem Druckanschluss einen ersten Druck P bereitstellt. Die erste Pumpe 42 ist als unidirektionale Pumpe ausgebildet und wird mittels eines Antriebsgliedes 44 angetrieben, wobei die erste Pumpe 42 entlang einer Pumpenachse 45 ausgerichtet ist, die vorzugsweise parallel zu der Längsachse 22 ausgerichtet ist.

Das Antriebsglied 44 ist, wie es in Fig. 1 durch eine gestrichelte Linie angedeutet ist, vorzugsweise nach der Art eines Nebenantriebes mit einem Ausgang des Antriebsmotors 12 verbunden, derart, dass die erste Pumpe 42 vorzugsweise mit einer Drehzahl angetrieben wird, die proportional ist zu einer Drehzahl des Antriebsmotors 12.

Die erste Pumpe 42 ist in einem Pumpenanordnungsgehäuse 46 angedeutet, das in Fig. 1 schematisch durch eine gestrichelte Linie angedeutet ist.

An dem Pumpenanordnungsgehäuse 46 ist ferner eine zweite Pumpe 48 festgelegt.

Die zweite Pumpe 48 weist einen Sauganschluss S₂ auf und stellt an einem Druckanschluss Hydraulikfluid mit einem Druck P₂ bereit. Die zweite Pumpe 48 wird mittels eines Elektromotors 50 angetrieben. Die zweite Pumpe 48 und der Elektromotor 50 sind entlang einer gemeinsamen zweiten Pumpenachse 51 ausgerichtet. Die zweite Pumpenachse 51 ist windschief, vorzugsweise quer zu der ersten Pumpenachse 45 ausgerichtet, obgleich dies in Fig. 1 aufgrund der schematischen Darstellung nicht gezeigt ist.

An dem Pumpenanordnungsgehäuse 46 ist ferner eine dritte Pumpe 52 angeordnet, die einen Sauganschluss S₃ aufweist und an einem Druckanschluss einen Pumpendruck P₃ bereitstellt. Die dritte Pumpe 52 wird ebenfalls von dem Antriebsglied 44 angetrieben, wobei die dritte Pumpe 52 vorzugsweise koaxial zu der ersten Pumpe 42 ausgerichtet ist und wobei das Antriebsglied 44 die erste Pumpe 42 vorzugsweise axial durchsetzt.

Die Sauganschlüsse S₂, S₃ der drei Pumpen 42, 48, 52 sind direkt oder über nicht dargestellte Fluidfilter mit einem Fluidsumpf verbunden, der in Fig. 1 schematisch bei 54 dargestellt ist.

An dem Pumpenanordnungsgehäuse 46 sind zu diesem Zweck jeweilige Gehäusesaugkanäle GS^ GS₂, GS₃ ausgebildet. Ferner sind in dem Pumpenanordnungsgehäuse 46 vorzugsweise Gehäusedruckkanäle GPi, GP₂, GP₃ ausgebildet, über die die Druckanschlüsse der Pumpen 42, 48, 52 mit der Umgebung verbunden werden können. Die erste Pumpe 42 und die zweite Pumpe 48 sind dabei vorzugsweise mit der Ventilanordnung 34 verbunden. Die dritte Pumpe 52 ist vorzugsweise mit dem Schmier-/Kühlkreis 40 verbunden, entweder direkt oder über die Ventilanordnung 34.

Die Ventilanordnung 34 weist eine Leitungsdruckventileinrichtung 60 auf, die von der ersten Pumpe 42 und von der zweiten Pumpe 48 bereitgestellten Drücke P,, P₂ in einen konstanten Leitungsdruck P_{L} umsetzt, ggf. unter Verwendung eines Druckspeichers oder dergleichen. Vorzugsweise beinhaltet die Ventilanordnung 34 jedoch keinen Druckspeicher, da die zweite Pumpe 48 dazu ausgebildet ist, zumindest kurzzeitig auch alleine hinreichend Fluid unter Druck zur Verfügung zu stellen, um den Leitungsdruck P_{L} zu erzeugen und hieraus eine Mehrzahl von Aktuatordrücken ableiten zu können.

Die Ventilanordnung 34 beinhaltet ferner eine Aktuatordruckventileinrichtung 62, die eine oder mehrere Ventile beinhaltet, die bspw. zur Erzeugung eines Kupplungsdruckes P_{c} für einen Aktuator der Kupplungsanordnung 14 ausgebildet sind, und/oder zur Erzeugung von einem oder mehreren Getriebedrücken P_{T} zum Ansteuern von einem oder mehreren Getriebeaktuatoren der Getriebeaktuatorik 38.

Die Leitungsdruckventileinrichtung 60 und/oder die Aktuatordruckventileinrichtung 62 können eine oder mehrere Druckregelventile beinhalten, die mit einer nicht näher dargestellten übergeordneten Getriebesteuerung verbunden sein können.

Bei der Pumpenanordnung 32 der Fig. 1 sind die erste und die zweite Pumpe an dem gemeinsamen Pumpenanordnungsgehäuse 46 festgelegt, das dazu ausgebildet ist, in dem Innenraum eines Antriebsstranggehäuses montiert zu werden, insbesondere in dem Innenraum eines Gehäuses der Getriebeanordnung 16. Das Pumpenanordnungsgehäuse 46 kann vorzugsweise aus Kunststoff hergestellt sein. Das Antriebsglied 44 kann mit dem Antriebsmotor 12 über ein Zugmittelgetriebe, einen Radsatz oder dergleichen gekoppelt sein. An dem Pumpenanordnungsgehäuse sind vorzugsweise Schnittstellen für die Druck- und Sauganschlüsse der drei Pumpen 42, 48, 52 ausgebildet.

Die erste Pumpe 42 ist vorzugsweise eine Hauptpumpe für die Kupplungsaktuatorik 36 und die Getriebeaktuatorik 38. Die zweite Pumpe 48 ist vorzugsweise eine Hilfspumpe, die insbesondere eingesetzt wird, wenn die Betriebsmodi Start/Stopp, Segeln, Schnellbe- füllung der Kupplungen bei niedrigen Antriebsmotordrehzahlen, oder Ähnliches eingesetzt werden, und/oder bei Ausfall der ersten Pumpe 42.

Die dritte Pumpe 52 ist an dem gemeinsamen Pumpenanordnungsgehäuse festgelegt.

In Fig. 2 ist eine weitere Ausführungsform eines Antriebsstranges 10' gezeigt, der hinsichtlich Aufbau und Funktionsweise generell dem Antriebsstrang 10 der Fig. 1 entspricht. Gleiche Elemente sind daher durch gleiche Bezugszeichen gekennzeichnet. Im Folgenden werden im Wesentlichen die Unterschiede erläutert. So ist in Fig. 2 angedeutet, dass das Antriebsglied 44 über ein Zugmittelgetriebe und/oder einen Radsatz 64 mit einem Ausgang des Antriebsmotors 12 verbunden sein kann, also insbesondere mit einer Kurbelwelle des Antriebsmotors 12 nach der Art eines Nebenantriebes oder dergleichen.

Ferner ist in Fig. 2 dargestellt, dass das Pumpenanordnungsgehäuse 46 ein erstes Gehäuseteil 66 und ein zweites Gehäuseteil 68 aufweisen kann. Das erste Gehäuseteil 66 und das zweite Gehäuseteil 68 werden vorzugsweise parallel zu der ersten Pumpenachse 45 aneinander montiert. Dabei wird zwischen dem ersten Gehäuseteil 66 und dem zweiten Gehäuseteil 68 eine Verbindungsebene 70 eingerichtet, die in Fig. 2 schematisch angedeutet ist. Die Verbindungsebene 70 kann eine Verbindungsebene im Sinne einer mathematischen Ebene sein, kann jedoch auch eine beliebig geformte Verbindungsschnittstelle sein. In jedem Fall verläuft die Verbindungsebene 70 im Wesentlichen quer zu der ersten Pumpenachse 45.

An dem ersten Gehäuseteil 66 ist eine erste Axialausnehmung 72 ausgebildet, die auf der dem zweiten Gehäuseteil 68 abgewandten axialen Seite ausgebildet ist. In die erste Axialausnehmung 72 ist die erste Pumpe 42 eingesetzt. Das Antriebsglied 44 und der damit verbundene Antrieb 64 sind auf dieser axialen Seite des ersten Gehäuseteils 66 angeordnet.

Das Antriebsglied 44 durchsetzt das erste Gehäuseteil 66 vorzugsweise in axialer Richtung.

An dem zweiten Gehäuseteil 68 ist eine zweite Axialausnehmung 74 ausgebildet, in die die dritte Pumpe 52 axial eingesetzt ist. Die zweite Axialausnehmung 74 ist auf der dem ersten Gehäuseteil 66 zugewandten axialen Seite des zweiten Gehäuseteils 68 ausgebildet.

Bei der Montage der Gehäuseteile 66, 68 aneinander wird die dritte Pumpe 52 über eine schematisch angedeutete Steckverbindung 76 mit dem Antriebsglied 44 gekoppelt, insbesondere in Drehrichtung gekoppelt, so dass die erste Pumpe 42 und die dritte Pumpe 52 gemeinsam über das Antriebsglied 44 angetrieben werden. Das Antriebsglied 44 kann ein einzelnes Bauteil sein, das das erste Gehäuseteil 66 axial durchsetzt, kann jedoch auch durch eine Mehrzahl von Einzelbauteilen gebildet sein, die untereinander in Drehrichtung gekoppelt sind.

Die zweite Pumpe 48 ist an einer Außenseite des zweiten Gehäuseteils 68 angebracht, derart, dass die zweite Pumpenachse 51 senkrecht zu der ersten Pumpenachse 45 verläuft, windschief hierzu.

Die erste Pumpe 42, die zweite Pumpe 48 und/oder die dritte Pumpe 52 können jeweils eigene Pumpengehäuse aufweisen, die mit Saug- und Druckanschlüssen ausgebildet sind, die mit nicht näher bezeichneten Saug- und Druckkanälen in dem Pumpenanordnungsgehäuse 46 verbunden sind. Das Pumpenanordnungsgehäuse 46 kann jedoch auch für die Pumpe 42 und/oder für die dritte Pumpe 52 zumindest einen Teil des Pumpengehäuses bilden. Die zweite Pumpe 48 weist vorzugsweise ein eigenes Pumpengehäuse auf, das von außen an dem Pumpenanordnungsgehäuse 46 festgelegt ist, jedoch vorzugsweise ebenfalls über Schnittstellen mit einem Druckkanal und/oder einem Saugkanal des Pumpenanordnungsgehäuses 46 verbunden ist.

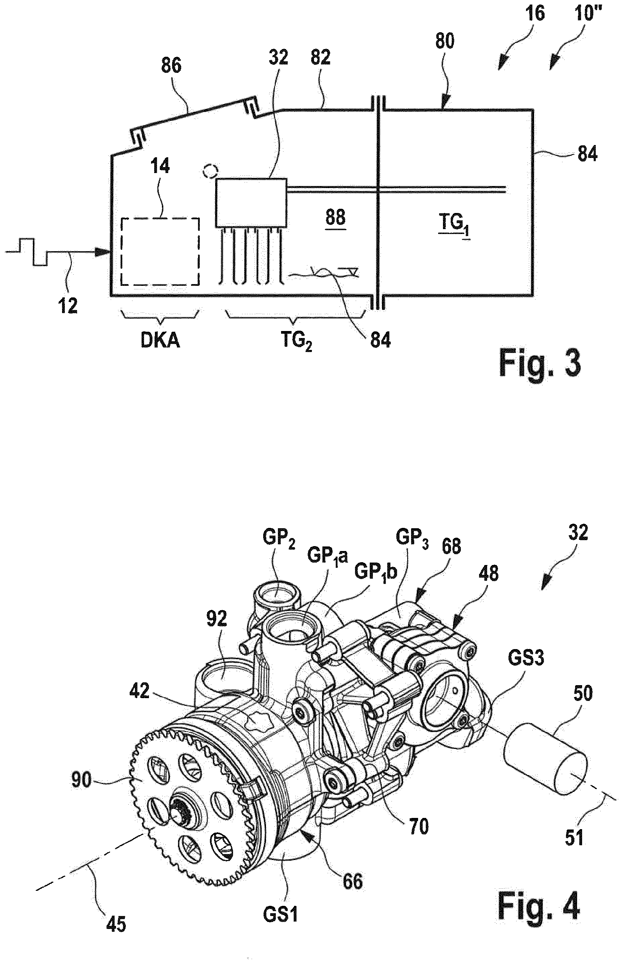

Fig. 3 zeigt eine weitere Ausführungsform eines Antriebsstranges 10", der hinsichtlich Aufbau und Funktionsweise wenigstens einer der oben beschriebenen Ausführungsformen entspricht. Gleiche Elemente sind daher durch gleiche Bezugszeichen gekennzeichnet. Im Folgenden werden im Wesentlichen die Unterschiede erläutert.

Der Antriebsstrang 10" weist eine Getriebeanordnung 16 auf, die ein Getriebegehäuse 80 beinhaltet. Das Getriebegehäuse 80 weist ein Hauptgehäuse 82 auf, das eingangsseitig mit dem Antriebsmotor 12 verbunden ist. Innerhalb des Hauptgehäuses 82 ist vorzugsweise eine Doppelkupplungsanordnung 14 vorgesehen, die in Fig. 3 auch mit DKA bezeichnet ist. Das Getriebegehäuse 80 weist ferner ein dem Antriebsmotor 12 axial gegenüberliegendes Nebengehäuse 84 auf, das als Gehäusetopf ausgebildet ist und mit dem Hauptgehäuse 82 über eine quer zu der Längsachse 22 verlaufende Verbindungsebene gekoppelt ist. In dem Nebengehäuse 84 kann ein erstes Teilgetriebe Td der Getriebeanordnung 16 aufgenommen sein. In dem Hauptgehäuse 82 kann ein zweites Teilgetriebe TG₂ der Getriebeanordnung 16 aufgenommen sein. An dem Hauptgehäuse 82 kann ein Montagedeckel 86 ausgebildet sein, über den Komponenten der Getriebeanordnung 16 montierbar sind, bspw. auch Komponenten eines Differentials 18.

Der Antriebsstrang 10" ist vorzugsweise für einen Sportwagen in Mittelmotorbauweise ausgestaltet, bei dem das Getriebegehäuse 80 in Fahrtrichtung hinter dem Antriebsmotor 12 angeordnet ist. Antriebswellen für die angetriebenen Räder 20L, 20R können sich daher in Querrichtung (nicht gezeigt) aus dem Hauptgehäuse 82 heraus erstrecken.

Das Getriebegehäuse 80 definiert einen Innenraum 88, innerhalb dessen der Fluidsumpf 54 ausgebildet ist. Das Pumpenanordnungsgehäuse 46 ist vorzugsweise in dem Innenraum 88 des Getriebegehäuses 80 oberhalb des Fluidsumpfes 54 festgelegt.

Da das Pumpenanordnungsgehäuse 46 über eine definierte Schnittstellenanordnung mit dem Getriebegehäuse 80 verbunden ist, ist es auch möglich, in manchen Varianten andere Pumpenanordnungsgehäuse einzubauen, bspw. mit einer anderen Pumpentechnologie von einer der genannten Pumpen 42, 48, 52. Beispielsweise können in einer Variante die erste Pumpe 42 durch eine Flügelzellenpumpe gebildet sein, und die zweite Pumpe 48 und die dritte Pumpe 52 jeweils durch eine Gerotorpumpe. Diese Pumpentechnologien können jedoch auch je nach Bedarf ausgetauscht werden oder durch andere Pumpentechnologien ersetzt werden. In allen Fällen ist es möglich, gleiche Verbindungsschnittstellen von dem Pumpenanordnungsgehäuse 46 zu dem Getriebegehäuse 80 zu realisieren.

In den Figuren 4 bis 10 ist eine Ausführungsform einer Pumpenanordnung 32 dargestellt, die hinsichtlich Aufbau und Funktionsweise einer der oben genannten Pumpenanordnungen entsprechen kann. Gleiche Elemente sind daher durch gleiche Bezugszeichen gekennzeichnet. Im Folgenden werden im Wesentlichen die Unterschiede erläutert.

In Fig. 1 ist zu erkennen, dass die erste Pumpe 42 auf der dem zweiten Gehäuseteil 68 abgewandten Seite mit einem Antriebsrad 90 verbindbar ist, das mit einem Zugmittelgetriebe in Eingriff stehen kann.

In den Figuren ist ferner dargestellt, dass Gehäusesaugkanäle GSt-GSa jeweils im Wesentlichen im Bereich einer Unterseite der Pumpenanordnung 32 bzw. des Pumpenanordnungsgehäuses 46 ausgebildet sind. Hierdurch ist es möglich, diese Gehäusesaugkanäle auf einfache Art und Weise mit dem Fluidsumpf 54 zu verbinden, bspw. über Fluidfilter oder Steckrohre.

Das Pumpenanordnungsgehäuse 46 wird insbesondere aufgrund des Antriebsgliedes 44 bzw. des Antriebsrades 90 vorzugsweise oberhalb des Fluidsumpfes 54 innerhalb des Getriebegehäuses 80 montiert.

In Fig. 4 ist ferner zu erkennen, dass die zweite Pumpe 48 an einer Außenseite des zweiten Gehäuseteils 68 montiert ist und eine Schnittstelle zur Verbindung mit einem Elektromotor 50 aufweist, und zwar ausgerichtet entlang der zweiten Pumpenachse 51.

Wie es in Fig. 4 ebenfalls dargestellt ist, sind die Gehäuseteile 66, 68 über Schraubverbindungen an der Verbindungsebene 70 miteinander verbunden. Im Bereich der Schraubverbindungen können auch Passstifte vorgesehen sein, zur Montage des Pumpenanordnungsgehäuses 46 an dem Getriebegehäuse 80.

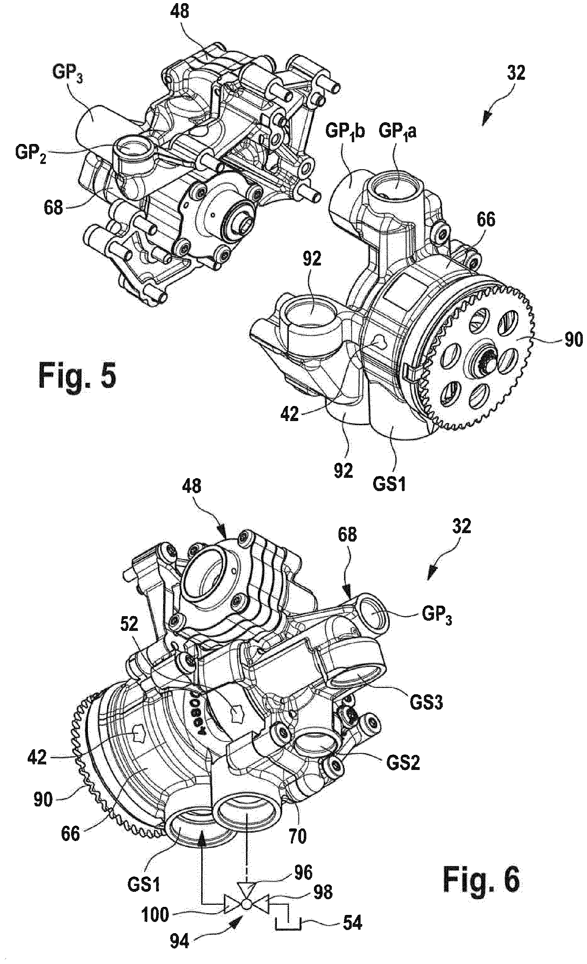

Wie es insbesondere in den Figuren 4, 5 und 6 dargestellt ist, kann an dem Pumpenanordnungsgehäuse 46 ein von oben nach unten durchgehender Durchgangskanal 92 ausgebildet sein. An der Oberseite kann der Durchgangskanal bspw. mit einem Rücklauf des Schmier-/Kühlkreises 40 verbunden sein. An der Unterseite kann der Durchgangskanal 92 entweder direkt oder indirekt mit einem der Gehäusesaugkanäle GS verbunden sein. Wie es in Fig. 6 gezeigt ist, ist es vorzugsweise vorgesehen, den Durchgangskanal 92 an seiner Unterseite mit dem ersten Gehäusesaugkanal GSt zu verbinden, und zwar über eine Strahlpumpe 94. Genauer gesagt wird der Durchgangskanal 92 mit einem Treibanschluss 96 der Strahlpumpe 94 verbunden. Ein Sauganschluss 98 der Strahlpumpe 94 wird mit dem Fluidsumpf 54 verbunden, und der Diffusor 100 der Strahlpumpe 94 wird mit dem ersten Gehäusesaugkanal GSi verbunden.

Hierdurch ist es möglich, für die Hauptpumpe 42 nicht nur einen hohen Druck sondern auch einen hohen Volumenstrom bereitzustellen.

Der Durchgangskanal 92 kann ferner mit einem Kühler verbunden sein, über den der Rücklauf des Schmier-/Kühlkreises 40 zunächst gekühlt wird, bevor er wieder gefördert wird.

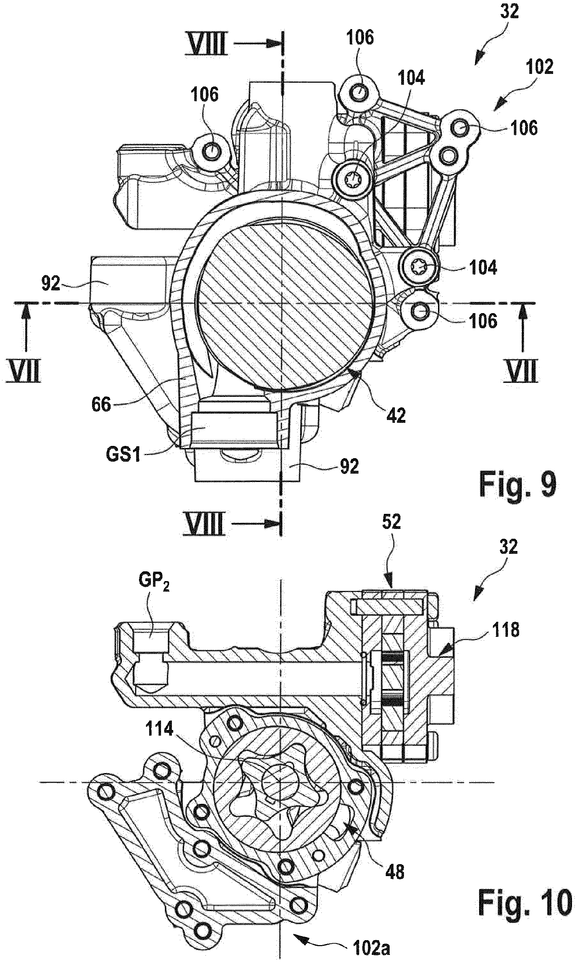

Ein Flanschbild 102 zur Realisierung der Verbindung der Gehäuseteile 66, 68 und für die Anbindung an das Getriebegehäuse 80 ist insbesondere in Fig. 9 dargestellt. Man erkennt, dass über das Flanschbild 102 bspw. mehrere Schrauben 104 zur Verbindung der Gehäuseteile 66, 68 verwendet werden können, wie auch Passstifte 106 zur Ausrichtung mit entsprechenden Passöffnungen in dem Getriebegehäuse 80.

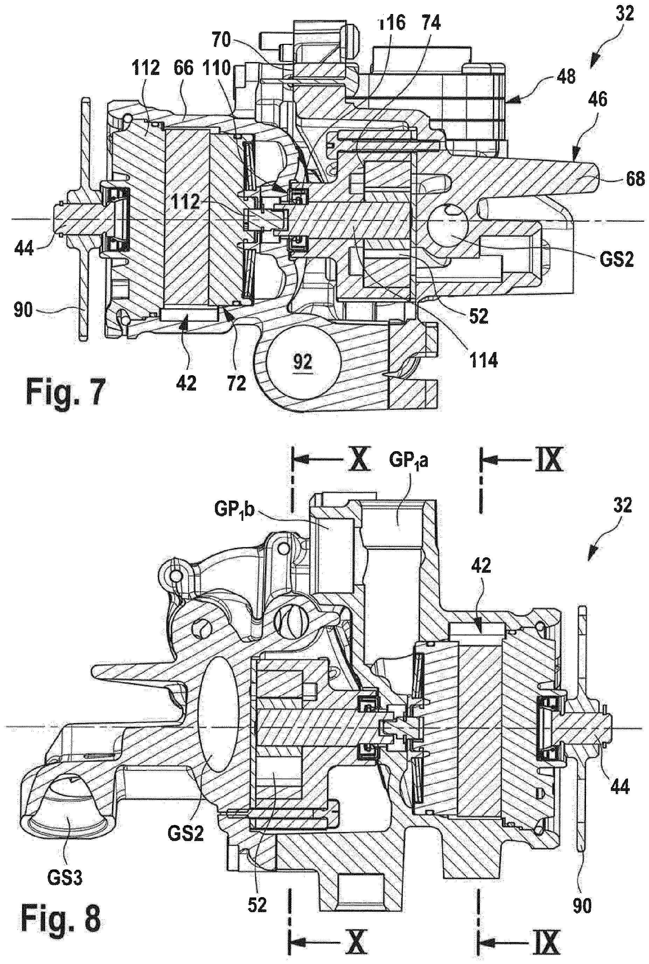

Insbesondere in Fig. 7 ist zu erkennen, dass das Antriebsglied 44 über die erste Pumpe 42 mit einem Drehglied 112 drehgekoppelt ist, das auf der dem zweiten Gehäuseteil 68 zugewandten axialen Seite des ersten Gehäuseteiles 66 zugänglich ist. Das zweite Gehäuseteil 68 beinhaltet die dritte Pumpe 52, die eine Rotorwelle 1 14 aufweist, die sich von der dritten Pumpe 52 in Richtung hin zu dem ersten Gehäuseteil 66 erstreckt. Die Rotorwelle 1 14 ist über eine Dichtung 1 16 gegenüber dem zweiten Gehäuseteil 68 abgedichtet. Ein freies Ende der Rotorwelle 1 14 ist über eine Steckverbindung, die eine Drehkopplung zwischen der Rotorwelle 114 und dem Drehglied 112 einrichtet, mit dem Drehglied 112 gekoppelt.

Wie es ferner in Fig. 7 und 8 zu erkennen ist, ist die erste Pumpe 42 vorzugsweise ohne eigenes Pumpengehäuse in das Pumpenanordnungsgehäuse 46 axial eingepresst, so dass das Pumpenanordnungsgehäuse 46 ein Pumpengehäuse der ersten Pumpe 42 bildet.

Es ist in Fig. 7 und 8 ferner zu erkennen, dass die dritte Pumpe 52 ein eigenes Pumpengehäuse aufweist, das über eine Schraubverbindung mit dem Pumpenanordnungsgehäuse 46 bzw. dem zweiten Gehäuseteil 68 gekoppelt ist, eingesetzt in die zweite Axialausnehmung 74.

In Fig. 10 ist zu erkennen, dass die zweite Pumpe 48 auf einer axialen Seite mit einem Gehäusedruckkanal GP₂ in dem zweiten Gehäuseteil 68 verbunden ist. Auf der axial gegenüberliegenden Seite (entlang der zweiten Pumpenachse 51), ist ein otorflansch 118 zur Verbindung mit dem Elektromotor 50 ausgebildet.

Durch die Pumpenanordnung 32 kann ein montagerechteres Handling erreicht werden, wobei die erste Pumpe 42 vorzugsweise in ein relativ kleines Pumpenanordnungsgehäuse 46 eingepresst wird, anstelle eines Einpressens in ein Differentialgehäuse oder ein Getriebegehäuse. Folglich kann eine kleinere Montagevorrichtung hinreichend sein, um die Pumpenanordnung zu montieren. Dabei kann die Pumpenanordnung ferner nach der Art eines Moduls vorab in einer Testeinrichtung getestet werden, wobei hierzu eine kleinere Prüfeinrichtung verwendbar ist (Kosteneinsparung). Durch das Pumpenanordnungsgehäuse 46 und die darin ausgebildeten Kanäle GP, GS können zusätzliche externe Leitungen entfallen. Insgesamt kann durch die kompakte Anordnung der Bauraum innerhalb des Innenraumes 88 des Getriebegehäuses 80 gewonnen werden. Ferner können unterschiedliche Pumpentechnologien in der Pumpenanordnung 32 integriert werden, ohne dass sich eine Schnittstelle zu dem Getriebegehäuse 80 ändert.

## Patentansprüche

1. Pumpenanordnung (32) für einen Kraftfahrzeug-Antriebsstrang (10), mit
- einer ersten Pumpe (42), die dazu ausgebildet ist, einen ersten Pumpendruck (PT) bereitzustellen, der hinreichend ist, um wenigstens eine Antriebsstrangkomponente (14, 16) hydraulisch zu betätigen, wobei die erste Pumpe (42) mit einem Antriebsglied (44) verbunden ist, das dazu ausgebildet ist, von einem Antriebsmotor (12) des Antriebsstranges (10) angetrieben zu werden, und wobei die erste Pumpe (42) entlang einer Pumpenachse (45) ausgerichtet ist
- einer zweiten Pumpe (48), die dazu ausgebildet ist, einen zweiten Pumpendruck (P₂) bereitzustellen, wobei die zweite Pumpe (48) mit einem Elektromotor (50) verbindbar ist, und die zweite Pumpe (48) und der Elektromotor (50) entlang einer zweiten Pumpenachse (51) ausgerichtet.ist und die erste und die zweite Pumpe (42, 48) an einem gemeinsamen Pumpenanordnungsgehäuse (46) festgelegt sind, das dazu ausgebildet ist, in dem Innenraum (88) eines Antriebsstranggehäuses (80) montiert zu werden **dadurch gekennzeichnet, dass**
- eine dritte Pumpe (52) an dem gemeinsamen Pumpenanordnungsgehäuse (46) festgelegt ist, wobei die dritte Pumpe (52) mit dem Antriebsglied (44) gekoppelt ist und wobei die zweite Pumpenachse (51) windschief zu der ersten Pumpenachse (45) ausgerichtet ist.

2. Pumpenanordnung nach Anspruch 1, **dadurch gekennzeichnet, dass** die dritte Pumpe (52) mit dem Antriebsglied (44) über eine axiale Steckverbindung (110) verbunden ist.

3. Pumpenanordnung nach Anspruch 1 oder 2, **dadurch gekennzeichnet, dass** das Pumpenanordnungsgehäuse (46) ein erstes Gehäuseteil (66) und ein zweites Gehäuseteil (68) aufweist, die entlang einer Verbindungsebene (70) miteinander verbunden sind, die quer zu einer Achse (45) der ersten Pumpe (42) verläuft.

4. Pumpenanordnung nach einem der Ansprüche 1 - 3, **dadurch gekennzeichnet, dass** das Pumpenanordnungsgehäuse (46) ein erstes Gehäuseteil (66) und ein zweites Gehäuseteil (68) aufweist, wobei die erste Pumpe (42) an dem ersten Gehäuseteil (66) festgelegt ist und wobei die zweite Pumpe (48) an dem zweiten Gehäuseteil (68) festgelegt ist.

5. Pumpenanordnung nach Anspruch 3 oder 4, **dadurch gekennzeichnet, dass** die erste Pumpe (42) in einer ersten Axialausnehmung (72) des ersten Gehäuseteils (66) aufgenommen ist, und/oder wobei die dritte Pumpe in einer zweiten Axialausnehmung (74) des Pumpenanordnungsgehäuses (46) aufgenommen ist.

6. Pumpenanordnung nach einem der Ansprüche 1 - 5, **dadurch gekennzeichnet, dass** die an dem Pumpenanordnungsgehäuse (46) festgelegten Pumpen (42, 48, 52) jeweils einen Pumpensauganschluss (S^ S₂, S₃) aufweisen, wobei in dem Pumpenanordnungsgehäuse (46) wenigstens ein Saugkanal (GSi, GS₂, GS₃) ausgebildet ist, der einen der Pumpensauganschlüsse (S S₂, S₃) mit einem zugeordneten Gehäusesauganschluss verbindet.

7. Hydraulikanordnung (30) für einen Kraftfahrzeug-Antriebsstrang (10), mit einer Pumpenanordnung (32) nach einem der Ansprüche 1 - 6, und mit einer Ventilanordnung (34), die mit einem Druckanschluss der ersten Pumpe (42) und mit einem Druckanschluss der zweiten Pumpe (48) verbunden ist, wobei die Ventilanordnung (34) ferner mit wenigstens einem Hydraulikaktuator (36, 38) zum Betätigen einer Antriebsstrangkomponente (14, 16) verbunden ist.

8. Hydraulikanordnung nach Anspruch 7, wobei die Ventilanordnung (34) eine Leitungsdruckventileinrichtung (60) aufweist, die aus dem Druck (P^ der ersten Pumpe (42) und/oder aus dem Druck (P₂) der zweiten Pumpe (48) einen Leitungsdruck (P_{L}) erzeugt, und/oder eine Aktuatordruckventileinrichtung (62) aufweist, die einen Aktuatordruck (P_{c}, P_{T}) für den Hydraulikaktuator (36, 38) erzeugt.

9. Antriebsstrang (10) für ein Kraftfahrzeug mit einer Pumpenanordnung (32) nach einem der Ansprüche 1 - 6 oder mit einer Hydraulikanordnung (30) nach Anspruch 7 oder 8.

## Claims

1. Pump arrangement (32) for a motor vehicle drive train (10), having
- a first pump (42) which is configured for providing a first pump pressure (PT) that is sufficient for hydraulically activating at least one drive train component (14, 16), wherein the first pump (42) is connected to an drive member (44) which is configured so as to be driven by a drive motor (12) of the drive train (10), and wherein the first pump (42) is aligned along a pump axis (45);
- a second pump (48) which is configured for providing a second pump pressure (P₂), wherein the second pump (48) is able to be connected to an electric motor (50), and the second pump (48) and the electric motor (50) are aligned along a second pump axis (51), and the first and the second pump (42, 48) are established on a common pump arrangement housing (46) which is configured so as to be installed in the interior space (88) of a drive train housing (80),
**characterized in that**
- a third pump (52) is established on the common pump arrangement housing (46), wherein the third pump (52) is coupled to the drive member (44), and wherein the second pump axis (51) is aligned so as to be skewed in relation to the first pump axis (45).

2. Pump arrangement according to Claim 1, **characterized in that** the third pump (52) is connected to the drive member (44) by way of an axial plug connection (110).

3. Pump arrangement according to Claim 1 or 2, **characterized in that** the pump arrangement housing (46) has a first housing part (66) and a second housing part (68) which are connected to one another along a connecting plane (70) which runs so as to be transverse to an axis (45) of the first pump (42).

4. Pump arrangement according to one of Claims 1 to 3, **characterized in that** the pump arrangement housing (46) has a first housing part (66) and a second housing part (68), wherein the first pump (42) is established on the first housing part (66), and wherein the second pump (48) is established on the second housing part (68).

5. Pump arrangement according to Claim 3 or 4, **characterized in that** the first pump (42) is received in a first axial clearance (72) of the first housing part (66), and/or wherein the third pump is received in a second axial clearance (74) of the pump arrangement housing (46).

6. Pump arrangement according to one of Claims 1 to 5, **characterized in that** the pumps (42, 48, 52) that are established on the pump arrangement housing (46) have in each case one pump suction port (S^ S₂, S₃), wherein at least one suction duct (GSi, GS₂, GS₃) which connects one of the pump suction ports (S S₂, S₃) to an assigned housing suction port is configured in the pump arrangement housing (46).

7. Hydraulic arrangement (30) for a motor vehicle drive train (10), having a pump arrangement (32) according to one of Claims 1 to 6, and having a valve arrangement (34) which is connected to a pressure port of the first pump (42) and to a pressure port of the second pump (48), wherein the valve arrangement (34) is furthermore connected to at least one hydraulic actuator (36, 38) for actuating a drive train component (14, 16).

8. Hydraulic arrangement according to Claim 7, wherein the valve arrangement (34) has a line pressure valve installation (60) which from the pressure (P^ of the first pump (42) and/or from the pressure (P₂) of the second pump (48) generates a line pressure (P_{L}), and/or has an actuator pressure valve installation (62) which generates an actuator pressure (P_{c}, P_{T}) for the hydraulic actuator (36, 38).

9. Drive train (10) for a motor vehicle, having a pump arrangement (32) according to one of Claims 1 to 6, or having a hydraulic arrangement (30) according to Claim 7 or 8.

## Revendications

1. Ensemble de pompes (32) pour une chaîne cinématique (10) de véhicule automobile, muni
- d'une première pompe (42), qui est configurée pour produire une première pression de pompe (PT), qui est suffisante pour actionner hydrauliquement au moins un composant de chaîne cinématique (14, 16), la première pompe (42) étant reliée à un organe d'entraînement (44), qui est configuré pour être entraîné par un moteur d'entraînement (12) de la chaîne cinématique (10), et la première pompe (42) étant dirigée le long d'un axe de pompe (45),
- d'une deuxième pompe (48), qui est configurée pour produire une deuxième pression de pompe (P₂), la deuxième pompe (48) pouvant être reliée à un moteur électrique (50), et la deuxième pompe (48) et le moteur électrique (50) étant dirigés le long d'un deuxième axe de pompe (51), et la première et la deuxième pompe (42, 48) étant fixées sur un carter d'ensemble de pompes commun (46), qui est configuré pour être monté dans l'espace intérieur (88) d'un carter de chaîne cinématique (80), **caractérisé en ce que**
- une troisième pompe (52) est fixée sur le carter d'ensemble de pompes commun (46), la troisième pompe (52) étant couplée à l'organe d'entraînement (44), et le deuxième axe de pompe (51) étant dirigé de travers par rapport au premier axe de pompe (45).

2. Ensemble de pompes selon la revendication 1, **caractérisé en ce que** la troisième pompe (52) est reliée à l'organe d'entraînement (44) par l'intermédiaire d'une liaison à emboîtement axiale (110).

3. Ensemble de pompes selon la revendication 1 ou 2, **caractérisé en ce que** le carter d'ensemble de pompes (46) comprend une première partie de carter (66) et une deuxième partie de carter (68), qui sont reliées l'une à l'autre le long d'un plan de liaison (70), qui s'étend perpendiculairement à un axe (45) de la première pompe (42).

4. Ensemble de pompes selon l'une quelconque des revendications 1 à 3, **caractérisé en ce que** le carter d'ensemble de pompes (46) comprend une première partie de carter (66) et une deuxième partie de carter (68), la première pompe (42) étant fixée sur la première partie de carter (66) et la deuxième pompe (48) étant fixée sur la deuxième partie de carter (68).

5. Ensemble de pompes selon la revendication 3 ou 4, **caractérisé en ce que** la première pompe (42) est reçue dans une première cavité axiale (72) de la première partie de carter (66), et/ou la troisième pompe est reçue dans une deuxième cavité axiale (74) du carter d'ensemble de pompes (46).

6. Ensemble de pompes selon l'une quelconque des revendications 1 à 5, **caractérisé en ce que** les pompes (42, 48, 52) fixées sur le carter d'ensemble de pompes (46) comprennent chacune un raccord d'aspiration de pompe (S^ S₂, S₃), au moins un canal d'aspiration (GSi, GS₂, GS₃) étant formé dans le carter d'ensemble de pompes (46), qui relie un des raccords d'aspiration de pompe, (S S₂, S₃) à un raccord d'aspiration de carter associé.

7. Ensemble hydraulique (30) pour une chaîne cinématique (10) de véhicule automobile, muni d'un ensemble de pompes (32) selon l'une quelconque des revendications 1 à 6, et muni d'un ensemble de soupapes (34), qui est relié à un raccord de pression de la première pompe (42) et à un raccord de pression de la deuxième pompe (48), l'ensemble de soupapes (34) étant en outre relié à au moins un actionneur hydraulique (36, 38) pour l'actionnement d'un composant de chaîne cinématique (14, 16).

8. Ensemble hydraulique selon la revendication 7, dans lequel l'ensemble de soupapes (34) comprend un appareil à soupape de pression de conduite (60), qui génère à partir de la pression (P^ de la première pompe (42) et/ou à partir de la pression (P₂) de la deuxième pompe (48) une pression de conduite (P_{L}), et/ou un appareil à soupape de pression d'actionneur (62), qui génère une pression d'actionneur (P_{c}, P_{T}) pour l'actionneur hydraulique (36, 38).

9. Chaîne cinématique (10) pour un véhicule automobile, munie d'un ensemble de pompes (32) selon l'une quelconque des revendications 1 à 6 ou munie d'un ensemble hydraulique (30) selon la revendication 7 ou 8.
